Europäisches Patentamt

European Patent Office

Office européen des brevets

(11) Publication number: **0 334 790**
A1

# (12) EUROPEAN PATENT APPLICATION

(21) Application number: **89500038.8**

(22) Date of filing: **21.03.89**

(51) Int. Cl.⁴: **B 41 J 3/46**
G 06 F 3/147, B 41 B 19/00

(30) Priority: **25.03.88 ES 8800914**

(43) Date of publication of application:
**27.09.89 Bulletin 89/39**

(84) Designated Contracting States:
**AT BE CH DE FR GB GR IT LI LU NL SE**

(71) Applicant: **SINETICS, S.A.**
**17, Caceres**
**E-28045 Madrid (ES)**

(72) Inventor: **Lanzas Galvache, Salvador**
**4, Espirea**
**E-28042 Madrid (ES)**

(74) Representative: **de Zunzunegui Redonet, Luis**
**ZUNZUNEGUI HERMANOS S.L. 5, Trueba y Fernandez**
**M-28016 Madrid (ES)**

(54) **Versatile texts and graphics printer.**

(57) The versatile text and graphic printer is equipment combining a display with a photocopier, through the replacement or supplement of the crystal or glass of the latter, by another glass or crystal (LCD) sheet fitted with dots or segments formed in its inside by means of "liquid crystal" with transparent conductive electrodes. The device has been provided with a paper feeding mechanism and the display has been -placed, as well, in such a way as to be visible to allow modifying texts. Data are recibed adequately through the interface, wich may include a memory and a certain intelligence degreed. The LCD sheet may be independent from the machine, --being connected to the required interfaces and alowing its --own supply.

It may be used, in lieu of the LCD sheet, other --display types, such as a cathode ray, laser or clear ceramics PLZT tubes, KERR cells, LED, etc.

**Description**

## VERSATILE TEXTS AND GRAPHICS PRINTER

### SUBJECT OF THE INVENTION

This present report aims to describe some devices -combining display techniques with those of photocopier machines, in such a way that the new printing equipment should --allow obtaining a fast printer, plotter, graphic and facsimile drawer, telex, telefax, etc. both in colour and in black -and white.

### BACKGROUND OF THE INVENTION

It is obvious that there are in the market place -highly variable photocopier machine types, and plotters, telex and telefax, as well as that there exist, in an isolated-and independent manner, printers either being of the daisy -wheel, ball, dots, ink ejection, laser type, etc.

The photocopying machines limit themselves to rapidly copying documents or objects, although by areas. The plotter, telex and telefax printers, on their side. work by --means of dots and/or characters, but they are much more slower This present invention combines the advantages of both types of machines in such a way as to obtain an equipment allowing to print and photocopy with absolute speed.

### INVENTION DESCRIPTION

We try. therefore to develop an equipment that would combine the display usual possibilities with those offered by the photocopying or reproducing machines thus allowing to perform, in a single operation, all functions which both the aboved mentioned mechanisms separately exert, by joining their advantages. In this way, when presenting a graphic text or image in a display, it not only allows visualizing them but also to inmediately print them upon the adequate surface, be it either sheet or roll paper. clear support, etc.

The combination of both the above equipments, which will give raise to the versatile printer being the subject of this invention, may be made by substitution. juxtaposition or projection, In the first case, the question lies in subtituting by the display the original glass upon which the object or text to be photocopied is placed. When the juxtaposition -system is used, such a substitution is not required; it will suffice with adapting the display to the photocopier original glass. Finally, in the projection case, it is the image itself which is optically projected on to the reproducer paper.

The equipment allows to consecutively present several images or masks, which may configurate a printing in colours,by using the ordinary data presentation and photocopy -techniques.

The image may be projected, as well, by transparency. illuminating a display (LCD, PLZT, etc.) by making the -light pass through it, with the added advantages of requiring a lower luminic power and obtaining a more perfect image or -printing.

Besides, it may be formed an electrostatic image (or mask) upon a surface (on which the paper will lie), through -the electronic gun or the CRT.

There is still the possibility, which confirms the system's versatility, to form the optical image by means of a controlled laser, the speed of which may be increased by dividing the original laser beam into a plurality of rays by means of (for instance) semi-transparent mirrors, thus advantageously profiting of the fact that to form such an image it is -not normally required to use all of the originally available laser power and independently controlling each of the rays --obtained (as a non-limitative example, we may mention the --PLZT shutter or KERR cell and/or the fact of directing each - beam with mobile electronically controled mirror).

### PREFERENTIAL PERFORMANCE OF THE INVENTION

The fundamental basis for this invention is therefore constituted by a display, either alphanumeric and/or graphic, which may be a glass or crystal sheet fitted with small segmented dots performed in its inside by means of "liquid -crystal" with conductive electrodes, which are also clear, made for instance (non-limitative example) in tin oxide, such -as those udes in the LCD (liquid crystal display) displays of electronic clocks, calculating machines, ultraplain and pocket TV sets, etc. This sheet will supplement or total or partially substitute the crystal or glass which usually have the -photocopying machines (upon which are usually placed the originals or objects to be photocopied by selectively activating the dots or segments in a well known way (through scanning, -for instance).

It is advisable, specially when operating by reflection, to fit the display surface with a non-reflecting coating thus obtaining a higher image quality.

It may be used, in lieu of the LCD, other types of display having a similar performance, as may be (as non-limitative example) the circon titanate clear ceramics dopped --with lead and lantane (PLZT or KERR cells).

When the sheet is fully disactivated it will appear transparent and the machine will simply act as a photocopier.

By selectivelly activating, by means of the adequate interface, the relevant dots or segments (which will be automatically selected starting off from data gathered in a reciver circuit which receives the signals and/or data from at-least one computer or emitting device), they will darken in higher o lesser degree and even totally, thus forming a mask-with the required characters or graphics, susceptible of being photocopied against a cover which may be white or of any not too dark colour.

It is obvious that several masks may be sequentially formed to apply different colours.

It is also clear, as well, that paper feeding mechanisms may be substituted or complemented in any known manner to handle sheet and/or roll paper(as non-limitative example, we may cite web computer forms).

The display may be placed in such a way that it be visible, in order to edit the text or image before making a -printing copy thereof, for a more correct and fast text treatment as well as to enter corrections in the image. The dots -may be dark while at rest become clearer , up to full transparency, when voltages and/or currents are applied as adequate and/or at the required frequency.

By selecting the activated dots configuration and/or by adequately controlling their darkness or transparency, -all kind of texts and graphics, both in colour and in black -and white, may be printed according with the photocopying --techniques already existing in the market place, receiving data through the inerface (which, as the case may be, will perform the scanning or either directly activate the selected --dots with the black,grey or transparency degree as required). The said interface may include memory and certain intelligence degree allowed according with the techniques being used, -and thus discharge the computer or data origin device of some printing task burden, which may be limited to sending such data at the maximum speed admissiblefor both equipments.

Once the selected dots or segments are darkened and with a white cover (as non-limitative example) placed on top and/or with illumination through the LCD, PLZT plate, etc., -the photocpying machine operation is activated, with which -the complete page, or the selected area, is printed (mainly - in the case of the roll paper or web form).

The LCD sheet will continuebeing transparent and the machine will be prepared to make photocopies, either automatically at the end of the printing operation, or by means of a push button or switch.

The LCD sheet, which will be conveniently protected may be independent from the machine connected to the require-interfaces and include its own supply, which will advantageously allow an easy and costless transformation of the photocopying machines (even those already sold) into fast printers,-plotters, telefax, etc. by simply superpossing the above-mentioned LCD sheet or screen upont the machin's orginal glass, without being required to undertake modifications or transformations of any kind.

On the other hand, by combining the different images and masks with the possibility to make the paper to stop and/ or feed back (positioning it either by its edges or by means of marks and/or punch holes), it is obtained a machine allowuing to superpose messages or graphics in one or several colours, as it is obvious. The aboved may be combined, as well, either in full or in part, with the electronic plates and with the sweeping or scanning systems for reading the documents -which will allow its function as a telefax, with automatic connection to the telephone line, including automatic dialling-etc.

In the light of the above discussion, it is obvious that displays of many types may be used, even those being developed in the future.As a non-limitative example, we may cite the LED (Lihgt Emitting Diodes) type luminous displays, --plasma type (either discharge or gaseous), electroluminiscent cathode ray screen, etc., both by placing them upon the photocopier's standard glass or if they are set inside the machine sheltered against eventual blows or deterioration of any kind.

Should the display be placed outside, itmay be assembled upon the cover, as it has already been mentioned, or either at a convenient distance from the glass in such way as -to allow a comfortable introduction of objects and/or documents to be photocopied,and/or governed by a mechanism to make such introduction and placing easier.

By using the electronic gun or CRT (cathode ray tube) technique it may be formed an electrostatic image upon a-surface on which the paper will be placed so as to allow direct electrostatic printing.

It is obvious that clear or grey tones may be obtained by altering the black dots density, as it is already done, for instance, when performing drawings or images with a direct electrostatic printer.

As it as been advance above, the optical image may also be formed through a laser beam which is reflected upon -at least one mobile mirror or prism, which beam may be directly controlled in any know manner. Should the beam be divided by means of semi-transparent mirrors and every ray thus obtained is controlled by means of efectronically moved mirrors and with shutters (such as the KERR cell), the image forming speed may be notably increased given the power concentration of available lasers.

Should photocopying techniques be used through which the document to be copied must be mechanically moved, the text or drawing may be presented in apparent motion, synchronized through its presentation in a display in offset positions in regard with time, according with the pulses generated in synchronism with the motion through any of the existing pickup -devices; as a non-limitative example we may cite the magnetic (inductive, HALL effect), optical, capacitive types, etc. The interface able to perform such apparent motion is at easy --reach of any experienced technical team, since its techniques are well known (they even may be made by software or pro grams from computer of any type).

It is obvious that information from the computer or outside device may reach in cryptographic form, as well that is password may be periodically and/or automatically changed.

Since there exist in the market place cryptographic circuits, interfaces, power suplays, reading scan, writing --scan and display devices with the control interface incorporated, and that even some of the said functions may be performed by commercial integrated circuits, it is not considered -necessary further description.

Having described the invention's nature, as well as a manner to practically perform it, we should state that above dispositions are susceptible of being modified in their detail, providing they do not alter its.fundamental principle, which ever the circumstances that may concur.

## Claims

1.—A versatile text and graphics printer, characterized by the fact that it has an alphanumeric and/or graphic display wich is printed (either by reflection or transparency) through photocopy as a colour or black and white mask; having been previewed a program and/or circuit to erase the display at will (which allows photocopy objects and/or documents) or either automatically; having been provided with the adequate interfaces and memories for its regulation through a device or computer, either directly or through a password and or through the adequate linking (telephone, radioelectric, fibre optics, etc.) and/or the interfaces and scan or sweeping elements for its function as a telefax and/or telex.

2.-A versatile text and graphics printer, according with claim first, essencially characterized by the fact that the machine is provided with a paper stop and/or back up and/or repositioning mechanism, and/or because it has been provided with, at least, one pickup device to send synchronous signals with the machine mechanical motion and an interface presenting in the display the text or graphic in aparent motion synchronized with the said signals and pulses.

3.- A versatile text and graphics printer, according with claims 1) and 2), essencially characterized by the fact that the device formed by the display or mask together -with the interfaces has been provided with its own supply system and its own protecting housings or elements, and/or by -placing the display in sucha a way that it is visible either directly or by using optical elements

4.- A versataile text and graphics printer, according with the previous claims, essencially characterized by the fact that the machine is provided with an electron gun -or CTR device to form an electrostatic image and/or a sole or divided laser beam to form the optical imagen.

5.- A versatile text and graphics printer, according with the previous claims, characterized by the fact that the display surface is provided with an antireflecting coating.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 110 794  (R.W. LESTER)<br>* Whole document *<br>--- | 1-5 | B 41 J   3/46<br>G 06 F   3/147<br>B 41 B  19/00 |
| X | US-A-4 194 833  (R.W. LESTER)<br>* Whole document *<br>--- | 1-5 | |
| X | WO-A-8 000 885  (H. LOWENTHAL)<br>* Whole document *<br>----- | 1-5 | |

TECHNICAL FIELDS
SEARCHED (Int. Cl.4)

B 41 J
G 06 F
B 41 B

The present search report has been drawn up for all claims

| Place of search | Date of completion of the search | Examiner |
|---|---|---|
| THE HAGUE | 23-06-1989 | VAN DEN MEERSCHAUT G. |